(19) **Europäisches Patentamt**

**European Patent Office**

**Office européen des brevets**

(11) Veröffentlichungsnummer: **0 450 485 B1**

(12) **EUROPÄISCHE PATENTSCHRIFT**

(45) Veröffentlichungstag der Patentschrift: **30.11.94**

(51) Int. Cl.5: **C08L 25/00**, C08L 33/12, C08L 35/06, //(C08L25/00,51:00, 51:00),(C08L33/12,51:00,51:00)

(21) Anmeldenummer: **91104862.7**

(22) Anmeldetag: **27.03.91**

(54) **Thermoplastische Formmasse.**

(30) Priorität: **06.04.90 DE 4011162**

(43) Veröffentlichungstag der Anmeldung:
**09.10.91 Patentblatt 91/41**

(45) Bekanntmachung des Hinweises auf die Patenterteilung:
**30.11.94 Patentblatt 94/48**

(84) Benannte Vertragsstaaten:
**BE DE ES FR GB IT NL**

(56) Entgegenhaltungen:
**EP-A- 0 006 503**
**EP-A- 0 074 046**
**EP-A- 0 081 761**

(73) Patentinhaber: **BASF Aktiengesellschaft**
**Carl-Bosch-Strasse 38**
**D-67063 Ludwigshafen (DE)**

(72) Erfinder: **Seitz, Friedrich, Dr.**
**Von-Wieser-Strasse 1**
**W-6701 Friedelsheim (DE)**
Erfinder: **Ruppmich, Karl**
**Koenigsbacher Strasse 134**
**W-6700 Ludwigshafen (DE)**
Erfinder: **Vietmeier, Juergen, Dr.**
**Im Kirchenstueck 12**
**W-6730 Neustadt (DE)**

Rank Xerox (UK) Business Services
(3.10/3.09/3.3.3)

**Beschreibung**

Die Erfindung betrifft witterungsbeständige, schlagzähe Formmassen aus teilchenförmigen Elastomeren, nämlich Pfropfpolymeren von Acrylester-Polymerisaten und Styrol-Acrylnitril-Copolymerisaten, die gut einfärbbar sind und hohen Oberflächenglanz aufweisen.

Thermoplastisch verarbeitbare schlagzähe Formmassen erhält man aus Styrol/Acrylnitril-Copolymerisaten durch Einarbeiten von teilchenförmigem Kautschuk. Dies geschieht im allgemeinen durch Pfropfmischpolymerisation von Styrol und Acrylnitril in Gegenwart des Kautschuks und wahlweise nachträgliches Abmischen dieses Pfropfproduktes mit einer eigens hergestellten Hartkomponente, der sog. Hartmatrix, die im allgemeinen aus einem Styrol-Acrylnitril-Copolymerisat besteht. Je nach dem verwendeten Kautschuk werden Formmassen mit unterschiedlichem Eigenschaftsbild erhalten.

Bei den sogenannten ABS-Polymerisaten werden als Kautschuk Dien-Polymerisate verwendet. Diese Produkte besitzen eine gute Schlagzähigkeit, insbesondere auch bei sehr niedriger Temperatur, jedoch eine relativ geringe Witterungs- und Alterungsbeständigkeit. Will man nicht nur schlagfeste, sondern gleichzeitig auch witterungs- und alterungsbeständige Produkte erhalten, müssen bei der Pfropfmischpolymerisation ethylenisch ungesättigte Kautschuke vermieden werden. Als geeignet haben sich dagegen kautschukelastische, vorzugsweise vernetzte Acrylsäureester-Polymerisate erwiesen. Die entsprechenden Formmassen, die auch als ASA-Polymerisate bezeichnet werden, werden vornehmlich verwendet für Gartenmöbel, Boote, Schilder, Straßenlampenabdeckungen usw., wobei viele Anwendungszwecke gefärbte Produkte, die einen leuchtenden und brillanten Farbeindruck geben, voraussetzen.

Die Herstellung witterungs- und alterungsbeständiger ASA-Polymerisate ist u.a. in der US-PS 3 055 859 und der DE-PS 1 260 135 beschrieben. Dabei wird zunächst als Pfropfgrundlage kautschukartiges Acrylsäureester-Polymerisat durch Emulsionspolymerisation von Acrylsäureestern einwertiger Alkohole mit 4 bis 8 Kohlenstoffatomen hergestellt. Der entstehende Latex hat einen mittleren Teilchendurchmesser im Bereich von unter 100 nm. Auf den Polyacrylsäureester wird ein Gemisch von Styrol und Acrylnitril aufgepfropft, d.h. polymerisiert, vorzugsweise ebenfalls in Emulsion. Zur Erzielung von ASA-Polymerisaten mit guten mechanischen Eigenschaften muß der als Pfropfgrundlage dienende Polyacrylsäureester-Kautschuk vernetzt sein; man stellt daher solche Kautschuke unter Zusatz geringer Mengen von bifunktionellen, vernetzend wirkenden Monomeren her.

Eine Verbesserung der aus der DE-PS 1 260 135 bekannten ASA-Polymerisate stellen die aus der DE-OS 19 11 882 bekannten dar. Danach wird als Pfropfgrundlage ein "großteiliger" Latex eines vernetzten Acrylsäureester-Polymerisats mit einem mittleren Teilchendurchmesser zwischen 150 und 800 nm und einer engen Teilchengrößenverteilung eingesetzt. Gegenüber den mit kleinteiligen Polyacrylester-Latices hergestellten, zeichnen sich ASA-Polymerisate mit großteiligen Polyacrylester-Latices durch verbesserte Kerbschlagzähigkeit, größere Härte und verminderte Schrumpfung aus. Gegenüber "kleinteiligen" Pfropfmischpolymerisaten haben die "großteiligen" Pfropfmischpolymerisate den Nachteil, die Einfärbbarkeit zu erschweren; entsprechende ASA-Polymerisate lassen sich nur bedingt zur Herstellung von farbigen Formkörpern verwenden, d.h. es werden nur stumpfe Farbtönungen mit pastellartigem Charakter erhalten, nicht jedoch brillante, leuchtenden Farbeinstellungen ohne Eintrübung.

In der DE 28 26 925 sind witterungsbeständige, schlagzähe thermoplastische Formmassen mit guter Einfärbbarkeit beschrieben, aus einem ersten Pfropfmischpolymerisat aus einem vernetzten Acrylester-Polymerisat und einem mittleren Teilchendurchmesser von etwa 50 bis 150 nm, als Pfropfgrundlage und Styrol und Acrylnitril als Pfropfhülle, einem zweiten, getrennt hergestellten Pfropfmischpolymerisat aus einem vernetzten Acrylester-Polymerisat mit einem mittleren Teilchendurchmesser von etwa 200 bis 500 nm, als Pfropfgrundlage und wiederum Styrol und Acrylnitril als Pfropfhülle sowie einer Hartkomponente aus einem Copolymerisat von Styrol oder α-Methylstyrol mit Acrylnitril; das Gewichtsverhältnis der Pfropfgrundlagen in der Formmasse beträgt etwa 90:10 bis 35:65 und der Anteil der Summe der beiden Pfropfgrundlagen beträgt etwa 10 bis 35 Gew.%, bezogen auf die Mischung.

Diese bekannten Massen besitzen eine gute Einfärbbarkeit und eine Kerbschlagzähigkeit, die weit über der der Einzelkomponenten liegt. Es zeigt sich jedoch, daß die mit diesen Massen erzielte Oberflächenqualität für manche Anwendungen, bei denen hochglänzende Oberflächen verlangt werden, nicht ausreicht.

Ausgehend von diesem Stand der Technik wurde nun gefunden, daß der Oberflächenglanz unter Beibehaltung der Vorteile, wie guter Einfärbbarkeit und hoher Kerbschlagzähigkeit, verbessert werden Kann, wenn ein zweites Pfropfmischpolymerisat verwendet wird aus 50 bis 80 Gew.%, vorzugsweise 60 bis 70 Gew.%, eines vernetzten Acrylester-Polymerisats mit einem mittleren Teilchendurchmesser von etwa 200 bis 700 nm als Pfropfgrundlage, einer ersten Pfropfhülle aus vorzugsweise Styrol und einer zweiten Pfropfhülle aus einer Mischung aus einem vinylaromatischen Monomeren und einem polaren, copolymerisierbaren, ethylenisch ungesättigten Monomeren im Gewichtsverhältnis 90:10 bis 60:40.

2

Die Herstellung solcher Pfropfmischpolymerisate ist an sich bekannt und z.B. in der DE 31 49 358 beschrieben.

Unmittelbarer Gegenstand der Erfindung sind demnach witterungsbeständige, schlagzähe thermoplastische Formmassen mit guter Einfärbbarkeit und hohem Oberflächenglanz aus

A: einem ersten Pfropfmischpolymerisat A aus

A1: 55 bis 75, vorzugsweise 60 bis 70 Gew.%, bezogen auf A, eines elastomeren vernetzten Acrylester-Polymerisat A1 mit einem mittleren Teilchendurchmesser (Gewichtsmittel) von 50 bis 150 nm als Pfropfgrundlage, und

A2: 45 bis 25, vorzugsweise 40 bis 30 Gew.%, bezogen auf A, einer Pfropfhülle A2 aus einem vinylaromatischen Monomeren und einem polaren, copolymerisierbaren, ethylenisch ungesättigten Monomeren im Gewichtsverhältnis 80:20 bis 65:35,

B: einem zweiten, getrennt hergestellten Pfropfmischpolymerisat B aus

B1: 50 bis 80, vorzugsweise 60 bis 70 Gew.%, bezogen auf B, eines von A1 verschiedenen, elastomeren vernetzten Acrylester-Polymerisats B1 mit einem mittleren Teilchendurchmesser (Gewichtsmittel) im Bereich von 200 bis 700 nm als Pfropfgrundlage,

B2: einer ersten Pfropfhülle B2 aus 5 bis 30, vorzugsweise 10 bis 20 Gew.%, bezogen auf B, eines vinylaromatischen Monomeren und

B3: einer zweiten Pfropfhülle B3 aus 15 bis 40, vorzugsweise 20 bis 30 Gew.%, bezogen auf B, einer Mischung aus einem vinylaromatischen Monomeren B31 und einem polaren, copolymerisierbaren, ethylenisch ungesättigten Monomeren B32 im Gewichtsverhältnis von B31 zu B32 von 90:10 bis 60:40 und

C: einer Hartmatrix C aus einem oder mehreren Copolymerisaten von Styrol, $\alpha$-Methylstyrol, Acrylnitril, Methylmethacrylat und/oder Phenylmaleinimid,

wobei erfindungsgemäß das Gewichtsverhältnis A1:B1 der Pfropfgrundlagen im Bereich von 95:5 bis 35:65 liegt und der Anteil der Summe A1 und B1 der Pfropfgrundlagen 10 bis 35 Gew.%, bezogen auf die Formmasse aus A, B und C, beträgt.

Die vorstehend verwendete Bezeichnung "Pfropfhülle" bedeutet die Summe der jeweiligen Pfropfäste, die der Pfropfgrundlage aufpolymerisiert sind. Sie soll hinsichtlich der räumlichen Anordnung keine Festlegung bedeuten, d.h. auch Pfropfäste umfassen, die keinen Bestandteil einer Umhüllung der Pfropfgrundlage bilden, sondern z.B. räumlich im Innern der Pfropfgrundlage angeordnet sind.

Die erfindungsgemäßen Formmassen enthalten für die praktische Verwendung als weitere Komponente D i.a. übliche Zusatz- und Hilfsstoffe in gebräuchlicher bzw. wirksamer Menge und zwar insbesondere geeignete Farbstoffe und/oder Pigmente.

Die Komponenten A und B werden jeweils für sich durch Pfropfmischpolymerisation einer Mischung aus einem vinylaromatischen Monomeren und einem polaren, copolymerisierbaren ethylenisch ungesättigten Monomeren auf ein vernetztes, kautschukartiges Acrylsäureester-Polymerisat hergestellt. Da bei der Pfropfmischpolymerisation in der Regel keine 100 %ige Pfropfung eintritt, enthält das Polymerisationsprodukt der Pfropfmischpolymerisation stets einen Anteil an freiem, nicht-gepfropftem Copolymerisat. Unter Pfropfmischpolymerisat im Sinne der Erfindung wird jedoch nur der tatsächlich gepfropfte Kautschuk bezeichnet. Der Anteil des Pfropfmischpolymerisats in dem Polymerisationsprodukt der Pfropfmischpolymerisation läßt sich in bekannter Weise durch Extraktion des freien nicht-gepfropften Copolymerisats aus dem Polymerisationsprodukt z.B. mittels Methylethylketon ermitteln, da die Pfropfgrundlage des Pfropfmischpolymerisats vernetzt und das Pfropfmischpolymerisat somit unlöslich ist. Das Prinzip des Trennverfahrens wurde z.B. von Moore, Moyer und Frazer, Appl. Polymer Symposia, Seite 67ff (1968) beschrieben.

Unter Pfropfgrad wird im Rahmen dieser Erfindung der prozentuale Anteil des in den Pfropfästen des Pfropfmischpolymerisats chemisch gebundenen Styrols und Acrylnitrils, bezogen auf das gesamte Pfropfmischpolymerisat, verstanden. Der Pfropfgrad läßt sich leicht aus der analytisch bestimmbaren Zusammensetzung des methylethylketonunlöslichen Gels berechnen.

Bei den erfindungsgemäßen mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z. Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, dem dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer

Teilchendurchmesser) die aus der integralen Massenverteilung bestimmten $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bis 90 Gew.% der Teilchen bezogen sind. Der Quotient Q

$$\frac{d_{90} - d_{10}}{d_{50}} = Q$$

stellt ein Maß für die Verteilungsbreite der Teilchengröße dar.

Die erfindungsgemäßen Pfropfmischpolymerisate A und B werden in bekannter Weise erhalten. Als Pfropfgrundlage A1 und B1 dienen jeweils vernetzte Acrylsäureester-Polymerisate entsprechender Art mit einer Glasübergangstemperatur unter 0°C. Die vernetzten Acrylsäureester-Polymerisaten sollen vorzugsweise eine Glastemperatur unter -20°C, insbesondere unter -30°C, besitzen. Die Glasübergangstemperatur der Acrylsäureester-Polymerisate kann z.B. nach der DSC-Methode (K.H. Illers, Makromol. Chemie 127 (1969), S. 1) bestimmt werden. Geeignete Monomere sind Acrylsäurealkylester mit 2 bis 8 Kohlenstoffatomen, vorzugsweise mit 4 bis 8 Kohlenstoffatomen, im Alkylrest. Acrylsäure-n-butylester und Acrylsäureethylhexylester sind besonders geeignet. Die Monomeren können jeweils allein oder auch in Mischung miteinander eingesetzt werden.

Um vernetzte Acrylsäureester-Polymerisate zu erhalten, wird die Polymerisation in Gegenwart von 0,5 bis 10 Gew.%, vorzugsweise 1 bis 5 Gew.%, bezogen auf die bei der Herstellung der Pfropfgrundlage eingesetzten gesamten Monomeren, eines copolymerisierbaren, mehrfunktionellen, die Vernetzung bewirkenden Monomeren durchgeführt. Als solche mehrfunktionellen Vernetzungs-Monomeren eignen sich Monomere, die vorzugsweise zwei, gegebenenfalls auch mehr zur Copolymerisation befähigte ethylenische Doppelbindungen enthalten, die nicht in 1,3-Stellung konjugiert sind. Geeignete Monomere sind beispielsweise Divinylbenzol, Diallylmaleat, Diallylfumarat oder Diallylphthalat. Als besonders günstig hat sich der Acrylsäureester des Tricyclodecenylalkohols erwiesen (vgl. DE-PS 1 260 935, die auch für die nachstehend beschriebene Herstellung Hinweise gibt).

Zunächst wird die Pfropfgrundlage A1 hergestellt, indem der oder die Acrylsäureester und das vernetzende Monomere, gegebenenfalls zusammen mit weiteren Comonomeren, in wäßriger Emulsion in an sich bekannter Weise polymerisiert werden. Es werden die üblichen Emulgatoren, in Mengen von 0,5 bis 5 Gew.%, bezogen auf die Monomeren, verwendet. Vorzugsweise nimmt man die Natriumsalze von Alkylsulfonaten oder Fettsäuren mit 10 bis 18 Kohlenstoffatomen. Im allgemeinen wird bei einem Wasser- zu Monomeren-Verhältnis von 2:1 bis 0,7:1 gearbeitet. Als Polymerisationsinitiatoren dienen die gebräuchlichen Persulfate, wie z.B. Kaliumpersulfat, es können jedoch auch Redox-Systeme zum Einsatz gelangen. Als weitere Polymerisationshilfsstoffe können die üblichen Puffersubstanzen und evtl. Molekulargewichtsregler wie Mercaptane, Terpinole oder dimeres α-Methylstyrol verwendet werden.

Die genauen Polymerisationsbedingungen, insbesondere Art, Dosierung und Menge des Emulgators, werden so gewählt, daß der erhaltene Latex einen $d_{50}$-Wert im Bereich von etwa 50 bis 150 nm, vorzugsweise im Bereich von 60 bis 100 nm besitzt. Die Teilchengrößen-Verteilung des Latex soll dabei vorzugsweise eng sein. Der Quotient Q = $(d_{90} - d_{10})/d_{50}$ soll kleiner als 0,5, möglichst kleiner als 0,35 sein. Dies erreicht man z.B. dadurch, daß man während der Polymerisation für eine konstante Konzentration von Monomeren und Emulgator sorgt und eine konstante Temperatur einhält.

Zur Herstellung des Pfropfmischpolymerisats (A) wird dann die vinylaromatische Verbindung, also Styrol, α-Methylstyrol oder kernalkyliertes Styrol und polare copolymerisierbare, ethylenisch ungesättigte Monomere, also Acrylnitril, Methacrylsäurealkylester mit 1 bis 4 Kohlenstoffatomen im Alkylrest, Acrylsäure, Maleinsäureanhydrid, Acrylamid oder Vinylmethylether, vorteilhaft wieder in wäßriger Emulsion auf die als Latex (d.h. Emulsion) vorliegende Pfropfgrundlage aufpolymerisiert. Die Pfropfmischpolymerisationkann im gleichen System erfolgen wie die Emulsionspolymerisation zur Herstellung der Pfropfgrundlage, wobei, falls notwendig, weiterer Emulgator und Initiator zugegeben werden kann. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so geführt, daß ein Pfropfgrad von 25 bis 45 Gew.%, vorzugsweise von 30 bis 40 Gew.%, im Pfropfmischpolymerisat A resultiert. Da die Pfropfausbeute bei der Pfropfmischpolymerisation nicht 100 % ist, muß eine etwas größere Menge des Monomerengemisches bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats A kann beispielsweise durch die Dosiergeschwindigkeit der Monomeren oder durch Reglerzugabe erfolgen (Chauvel, Daniel, ACS Polymer Preprints 15 (1974) Seite 329ff). Der Anteil des Pfropfmischpolymerisats A in dem erhaltenen Polymerisationsprodukt wird wie beschrieben ermittelt.

Als Pfropfgrundlage B1 für die Herstellung des zweiten Pfropfmischpolymerisats B wird ebenfalls ein vernetztes Acrylsäureester-Polymerisat eingesetzt. Für die Art und Weise der Herstellung der Pfropfgrundlage B1 gilt das vorstehend gesagte.

Zum Unterschied zu dem vernetzten Acrylsäureester-Polymerisat, das als Pfropfgrundlage A1 dient, soll das vernetzte Acrylsäureester-Polymerisat B1 großteilig sein, nämlich einen mittleren Teilchendurchmesser (Gewichtsmittel) im Bereich von etwa 200 bis 700 nm, vorzugsweise im Bereich von 250 bis 500 nm aufweisen. Es ist erstrebenswert, wenn dieses großteilige, vernetzte Acrylsäureester-Polymerisat B2 eine enge Teilchengrößenverteilung aufweist, wobei es günstig ist, wenn der Quotient $Q = (d_{90}-d_{10})/d_{50}$ kleiner als 0,3, vorzugsweise kleiner als 0,2 ist. Als Pfropfgrundlage B1 geeignete großteilige vernetzte Acrylsäureester-Polymerisate können nach den bekannten Verfahren zur Herstellung großteiliger Dispersionen erhalten werden, zweckmäßig jedoch nach der Saatlatex-Methode, wie sie in der DE-PS 1 911 882 für die Herstellung von ASA-Polymerisaten beschrieben ist. Nach dieser Methode wird ein kleinteiliger vernetzter Acrylsäureester-Polymerisat-Latex mit einem mittleren Teilchendurchmesser, dessen Teilchendurchmesser also vorzugsweise unter 120 nm liegt und wie beschrieben durch Emulsionspolymerisation von Acrylsäureester, vernetzenden Monomeren sowie gegebenenfalls weiteren Comonomeren erhalten worden ist, durch Zugabe von weiteren Monomeren und Emulgator einer weiteren Polymerisation unterworfen. Dabei werden die Bedingungen (vgl. Journal of Applied Polymer Science, Vol. 9 (1965), Seiten 2929 bis 2938) so eingestellt, daß lediglich die vorhandenen Polymerisatpartikel des Saatlatex weiter wachsen, aber keine neuen Latexteilchen gebildet werden. Die Teilchengröße des resultierenden großteiligen Latex läßt sich durch Variation des Mengenverhältnisses von Saatlatex zu Monomeren in der gewünschten Weise einstellen.

Zur Herstellung des erfindungsgemäßen zweiten Pfropfmischpolymerisats B wird in Gegenwart des zuvor hergestellten großteiligen Latex B1 zuerst ein vinylaromatisches Monomer, insbesondere Styrol, ferner α-Methylstyrol, oder ein kernalkyliertes Styrol wie p-Methylstyrol und tert.-Butylstyrol verwendet.

Die Pfropfmischpolymerisation kann zweckmäßig im gleichen System wie die Emulsionspolymerisation zur Herstellung der Pfropfgrundlage A vorgenommen werden; dabei kann weiterer Emulgator und Initiator zugegeben werden. Das aufzupfropfende Monomere, d.h. insbesondere Styrol, kann dem Reaktionsgemisch auf einmal, absatzweise in mehreren Stufen oder vorzugsweise kontinuierlich während der Polymerisation zugegeben werden. Die Pfropfmischpolymerisation wird so geführt, daß ein Pfropfgrad von 2,5 bis 25 Gew.%, vorzugsweise von 15 bis 20 Gew.%, im Pfropfmischpolymerisat B resultiert. In einer zweiten Stufe wird dann die Pfropfmischpolymerisation mit einem Monomerengemisch, also mindestens einem vinylaromatischen Monomeren bzw. Styrol und mindestens einem copolymerisierbaren polaren Monomeren bzw. Acrylnitril im Verhältnis von 90:10 bis 60:40, vorzugsweise 75:25 bis 65:35 fortgeführt. Beispiele für vinylaromatische Monomere sind bereits bei der Beschreibung der ersten Pfropfstufe genannt. Ein Beispiel für ein polares copolymerisierbares, ethylenisch ungesättigtes Monomer ist Acrylnitril. Außer Acrylnitril kann Methacrylsäurealkylester mit 1 bis 4 Kohlenstoffatomen im Alkylrest, Acrylsäure, Maleinsäureanhydrid, Acrylamid und/oder Vinylmethylether verwendet werden. Bevorzugt ist Acrylnitril, Ethylacrylat, Methylmethacrylat oder deren Gemische. Besonders bevorzugt für die 2. Stufe der Pfropfung werden vor allem Styrol und Acrylnitril, ferner α-Methylstyrol und Acrylnitril sowie Styrol, Acrylnitril und Methylmethacrylat. Auch der zweite Schritt der Pfropfmischpolymerisation wird zweckmäßigerweise im vorhandenen System durchgeführt; dabei kann, falls notwendig, weiterer Emulgator und Initiator zugegeben werden. Das aufzupfropfende Monomeren-Gemisch kann wieder auf einmal, absatzweise in mehreren Stufen oder vorzugsweise kontinuierlich zugegeben werden. Die Pfropfmischpolymerisation wird so geführt, daß ein Pfropfgrad von 10 bis 45 Gew.%, vorzugsweise von 15 bis 40 Gew.%, im Pfropfmischpolymerisat B resultiert.

Neben den beiden Pfropfmischpolymerisaten A und B enthalten die erfindungsgemäßen Mischungen eine Hartkomponente (Hartmatrix) aus einem oder mehreren Homo- oder Copolymeren von Styrol, α-Methylstyrol, Acrylnitril, Methylmethacrylat und/oder Phenylmaleinimid. Zu dieser Hartkomponente C zählen auch die bei der Pfropfmischpolymerisation entstandenen freien, d.h. nicht gepfropften Copolymerisate aus vinylaromatischen Monomeren und polaren Monomeren.

Bei dieser Hartkomponente C kann es sich also z.B. um Polymethylmethacrylat, ein Styrol/Acrylnitril-Copolymerisat, ein α-Methylstyrol/Acrylnitril-Copolymerisat, ein Styrol/α-Methylstyrol/Acrylnitril-Copolymerisat oder ein Styrol/Acrylnitril/Methylmethacrylat-Copolymerisat handeln.

Diese Polymerisate können einzeln oder auch in Mischung miteinander für die Hartkomponente eingesetzt werden, so daß es sich bei der Hartkomponente C beispielsweise um eine Mischung aus einem Styrol/Acrylnitril-Copolymerisat und einem α-Methylstyrol/Acrylnitril-Copolymerisat handeln kann.

Wenn die Hartkomponente C aus einer Mischung eines Styrol/Acrylnitril-Copolymerisats und eines α-Methylstyrol/Acrylnitril-Copolymerisats besteht, sollen die Acrylnitril-Gehalte der beiden Copolymerisate tunlichst um nicht mehr als 10 Gew.%, vorzugsweise nicht mehr als 5 Gew.%, voneinander abweichen. Die Hartkomponente C kann auch nur aus einem einzigen Styrol/Acrylnitril-Copolymerisat bestehen, nämlich dann, wenn sowohl bei der Pfropfmischpolymerisation zur Herstellung der Komponenten A und B als auch bei der Herstellung der Hartkomponente C von dem gleichen Monomer-Gemisch aus Styrol und Acrylnitril ausgegangen wird.

Die Hartkomponente C kann auf übliche Weise erhalten werden. So kann die Copolymerisation des Styrols und/oder α-Methylstyrols mit dem Acrylnitril in Masse, Lösung, Suspension oder wäßriger Emulsion durchgeführt werden. Die Hartkomponente hat vorzugsweise eine Viskositätszahl von 40 bis 100, insbesondere von 50 bis 80. Die Viskositätszahl wird nach der Vorschrift der DIN 53 726 bestimmt; sie bezieht sich auf die Konzentration von 0,5 g in 100 ml Dimethylformamid.

Die Abmischung der separat hergestellten Hartkomponente C mit den bei der Pfropfmischpolymerisation erhaltenen Produkten zu den erfindungsgemäßen Massen kann z.B. so vorgenommen werden, daß ein Teil der Komponente C zunächst mit A, und der restliche Teil mit B gemischt wird und dann die beiden Teilmischungen vereinigt werden.

Es ist aber genauso möglich, zunächst die Komponenten A und B zu vermischen und anschließend C einzumischen. Zweckmäßig werden dabei A, B und C in solchen Mengenverhältnissen verwendet, daß in der Gesamt-Mischung die beiden als Pfropfgrundlage dienenden vernetzten Acrylsäureester-Polymerisate A1 und B1 im Gewichtsverhältnis A1:B1 von etwa 95:5 bis 35:65 und vorzugsweise von 95:5 bis 50:50 vorliegen, und weiterhin der Anteil der beiden als Pfropfgrundlage dienenden vernetzten Acrylsäureester-Polymerisate zusammen (A1 + B1) in der gesamten Mischung (A + B + C) 10 bis 35 Gew.%, vorzugsweise 15 bis 30 Gew.%, bezogen auf die Mischung, ausmacht.

Das Mischen kann auf beliebige Weise erfolgen. Wenn Emulsions-Polymerisate vorliegen, ist es möglich, die Polymer-Dispersionen miteinander zu vermischen, darauf zu fällen und aufzuarbeiten. Vorzugsweise geschieht jedoch das Mischen durch gemeinsames Extrudieren, Kneten oder Verwalzen, wobei die Einzelbestandteile wenn nötig zuvor isoliert worden sind. Die aus wäßriger Dispersion erhaltenen Produkte können auch teilweise entwässert und als feuchte Krümmel mit der Hartkomponente C vermischt werden, wobei dann während des Vermischens vollständige Trocknung geschieht.

Die erfindungsgemäßen Mischungen können übliche Zusatz- und/oder Hilfsstoffe D enthalten, wie sie für ASA-Polymerisate üblich und gebräuchlich sind, beispielsweise Füllstoffe, weitere verträgliche Kunststoffe, Antistatika, Antioxidantien, Flammschutzmittel und Schmiermittel. Zusatz- und Hilfsstoffe werden in üblichen und wirksamen Mengen, vorzugsweise von 0,1 bis zu insgesamt etwa 30 Gew.%, bezogen auf die Mischung (A + B + C), eingesetzt.

Aus den erfindungsgemäßen Massen hergestellte Gegenstände besitzen hohen Oberflächenglanz. Unter Oberflächenglanz wird dabei das Reflexionsvermögen der Oberfläche für sichtbares Licht verstanden. Bei Verwendung der erfindungsgemäßen Massen werden Gegenstände erhalten, deren Reflexionsvermögen deutlich höher liegt als bei Verwendung von Formmassen, wie sie in DE 28 26 925 beschrieben sind, obwohl diese bereits ein gutes Niveau aufweisen.

Auch bei der Einfärbbarkeit der erfindungsgemäßen Formmassen bestehen Vorteile gegenüber den in der DE 28 26 925 beschriebenen Formmassen. Diese Vorteile machen sich vor allem bei kompliziert geformten Formteilen und dunklen Farben bemerkbar. Auch unter ungünstigen Bedingungen werden bei Verwendung der erfindungsgemäßen Formmassen homogen eingefärbte Oberflächen erhalten.

Unter Einfärbbarkeit wird dabei die Erzielung brillanter Farbtöne mit möglichst kleinen Pigmentmengen verstanden. Die erfindungsgemäßen Massen können daher als Zusatzstoff D insbesondere Farbstoffe oder Pigmente eingemischt enthalten. Die Farbstoffe oder Pigmente werden üblicherweise in Mengen von etwa 0,02 bis etwa 10 Gew.%, vorzugsweise von 0,2 bis 5 Gew.%, bezogen auf A + B + C zugesetzt. Als Farbstoffe und Pigmente kommen beispielsweise in Betracht: Cadmiumsulfid, Kupfer-phthalocyanin, Eisenoxide und feinteilige Ruße. Die eingefärbten Formkörper zeichnen sich durch einen ausgezeichneten Farbeindruck aus, wobei brillante und leuchtende Farbtöne ohne jede Eintrübung oder Grauschleier erhalten werden können. Die Formkörper besitzen auch praktisch keine unterschiedliche Farbtönung im Bereich der Angußstelle und der Bindenaht, wie sie unerwünscht bei der Spritzgußverarbeitung von gefärbten ASA-Polymerisaten mit kleinteiligen Pfropfmischpolymerisaten der Komponente A stark beobachtet werden. Die durch Spritzguß verarbeiteten, gefärbten erfindungsgemäßen Massen zeigen vielmehr eine gute Farbegalität im Bereich der Angußmarkierung und der Bindenaht.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Gartenmöbeln, Booten, Schildern, Straßenlampenabdeckungen und Kinderspielzeug verarbeiten.

Die nachstehend angegebene mittlere Teilchengröße und die Teilchengrößenverteilung wurde aus der integralen Massenverteilung nach der oben angegebenen Methode bestimmt. Die Ermittlung der Pfropfausbeute und somit des Anteils des Pfropfmischpolymerisats in dem bei der Pfropfmischpolymerisation erhaltenen Produkt erfolgte durch Extraktion mit Methylethylketon bei 25°C. Der Pfropfgrad, d.h. der prozentuale Anteil von im Pfropfmischpolymerisat enthaltenen gepfropftem Styrol und Acrylnitril, ergibt sich am einfachsten aus der elementaranalytischen Bestimmung von Stickstoff (aus Acrylnitril) und Sauerstoff (aus Acrylester) im in Methylethylketon unlöslichen Gel. Die Kerbschlagzähigkeit der Massen wurde nach DIN 53 453 an gespritzten Normkleinstäben bei 23°C ermittelt. Die Spritztemperatur für die Normkleinstäbe betrug dabei 250°C.

Für die Glanzmessung wurden Prüfkörper bei verschiedenen Massetemperaturen durch Spritzguß hergestellt. Die Glanzmessungen wurden an einem Reflektometer UME3 der Firma Dr. Lange bei einem Einstrahlwinkel von 45° durchgeführt.

Die in den nachstehenden Beispielen angegebenen Mengen beziehen sich auf das Gewicht.

a) Herstellung des feinteiligen Pfropfmischpolymerisats A

a1) 16 Teile Butylacrylat und 0,4 Teile Tricyclodecenylacrylat wurden in 150 Teilen Wasser unter Zusatz von einem Teil des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Reaktion wurde innerhalb von 3 Stunden eine Mischung aus 82 Teilen Butylacrylat und 1,6 Teilen Tricyclodecenylacrylat zugegeben. Danach wurde noch eine Stunde sich selbst überlassen. Der erhaltene Latex hatte einen Feststoffgehalt von 40 Gew.%. Die mittlere Teilchengröße (Gewichtsmittel) wurde zu 76 nm ermittelt. Die Teilchengrößenverteilung war eng (Quotient Q = 0,29).

a2) 150 Teile des nach a1) erhaltenen Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Sodann wurde mittels Calciumchloridlösung bei 95°C gefällt, mit Wasser gewaschen und im warmen Luftstrom getrocknet. Der Pfropfgrad des Pfropfmischpolymerisats war 35 %.

b) Herstellung des großteiligen Pfropfmischpolymerisats BI

b1) Zu einer Vorlage aus 2,5 Teilen des wie in a1) beschrieben hergestellten Latex wurden nach Zugabe von 50 Teilen Wasser und 0,1 Teilen Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser zugegeben. Dabei betrug die Temperatur der Vorlage 60°C. Nach Zulaufende wurde zwei Stunden nachpolymerisiert. Der erhaltene Latex hatte einen Feststoffgehalt von 40 %. Die mittlere Teilchengröße (Gewichtsmittel) des Latex wurde zu 410 nm ermittelt.

b2) 150 Teile des nach b1) erhaltenen Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die erhaltene Dispersion wurde mit 20 Teilen eines Gemisches aus Styrol und Acrylnitril im Verhältnis 75:25 weitere 4 Stunden polymerisiert, mittels Calciumchloridlösung bei 95°C gefällt, abgetrennt, mit Wasser gewaschen und im warmen Luftstrom getrocknet. Der Pfropfgrad wurde zu 35 % ermittelt.

c) Herstellung eines großteiligen Pfropfmischpolymerisats (Vergleichsversuch, Komponente BII)

150 Teile des nach b1) erhaltenen Latex wurden mit 40 Teilen einer Mischung aus Styrol und Acrylnitril im Verhältnis 75:25 und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Dann wurde mittels einer Calciumchloridlösung bei 95°C gefällt, abgetrennt, mit Wasser gewaschen und im warmen Luftstrom getrocknet. Der Pfropfgrad des Pfropfmischpolymerisats wurde zu 32 % ermittelt.

d) Herstellung der Hartkomponente C

Ein Monomerengemisch aus Styrol und Acrylnitril wurde unter üblichen Bedingungen in Lösung polymerisiert. Das erhaltene Styrol/Acrylnitrilcopolymerisat hatte einen Acrylnitril-Gehalt von 35 % und eine Viskositätszahl von 80 ml/g.

e) Herstellung der Mischungen

Zunächst wurden die nach a) bis c) hergestellten Pfropfprodukte jedes für sich mit dem nach d) hergestellten Styrol/Acrylnitril-Copolymerisat im Verhältnis 1:1 in einem Extruder bei 280°C abgemischt.

Aus diesen Vormischungen wurden anschließend mit weiterer Hartkomponente C die in der nachstehenden Tabelle angegebenen Mischungen hergestellt. Die Abmischung geschah ebenfalls in einem Extruder bei 280°C. Dabei wurde 1 % eines Schmiermittels (Diethylphthalat) und 1 % eines Farbstoffs (Cadmiumrot) zugesetzt.

7

Die Ergebnisse sind ebenfalls in der Tabelle angegeben. Gegenüber dem Vergleichsversuch ist die Kerbschlagzähigkeit der erfindungsgemäßen Formmasse leicht erhöht. Entscheidend ist, daß der gemessene Glanz bei dem erfindungsgemäßen Beispiel gegenüber dem Vergleichsversuch deutlich erhöht ist. Dies gilt für den gesamten Bereich der Massetemperaturen beim Spritzguß, in dem ASA-Polymerisate üblicherweise verarbeitet werden.

Tabelle 1

| | | erfindungsgemäßes Beispiel | Vergleichsversuch |
|---|---|---|---|
| Komponente | A | 18 Teile | 18 Teile |
| | BI | 12 Teile | - |
| | BII | - | 12 Teile |
| | C | 70 Teile | 70 Teile |
| Kerbschlagzähigkeit [kJ/m$^2$] | | 8.5 | 7.5 |
| Glanz [% Reflexion] | | | |
| Massetemp. | 230 °C | 55 | 48 |
| | 255 °C | 35 | 27 |
| | 280 °C | 19 | 13 |

**Patentansprüche**

1. Thermoplastische Formmasse, enthaltend

A: ein erstes Pfropfmischpolymerisat A aus

A1: 55 bis 75, vorzugsweise 60 bis 70 Gew.%, bezogen auf A, eines elastomeren vernetzten Acrylester-Polymerisats A1 mit einem mittleren Teilchendurchmesser (Gewichtsmittel) von 50 bis 150 nm als Pfropfgrundlage, und

A2: 45 bis 25, vorzugsweise 40 bis 30 Gew.%, bezogen auf A, einer Pfropfhülle A2 aus einem vinylaromatischen Monomeren und einem polaren, copolymerisierbaren, ethylenisch ungesättigten Monomeren im Gewichtsverhältnis 80:20 bis 65:35,

B: ein zweites, getrennt hergestelltes Pfropfmischpolymerisat B aus

B1: 50 bis 80, vorzugsweise 60 bis 70 Gew.%, bezogen auf B, eines von A1 verschiedenen, elastomeren vernetzten Acrylester-Polymerisats B1 mit einem mittleren Teilchendurchmesser (Gewichtsmittel) im Bereich von 200 bis 700 nm als Pfropfgrundlage,

B2: einer ersten Pfropfhülle B2 aus 5 bis 30, vorzugsweise 10 bis 20 Gew.%, bezogen auf B, eines vinylaromatischen Monomeren und

B3: einer zweiten Pfropfhülle B3 aus 15 bis 40, vorzugsweise 20 bis 30 Gew.%, bezogen auf B, einer Mischung aus einem vinylaromatischen Monomeren B31 und einem polaren, copolymerisierbaren, ethylenisch ungesättigten Monomeren B32 im Gewichtsverhältnis von B31 zu B32 von 90:10 bis 60:40 und

C: einer Hartmatrix C aus einem oder mehreren Copolymerisaten von Styrol, α-Methylstyrol, Acrylnitril, Methylmethacrylat und/oder Phenylmaleinimid,

dadurch gekennzeichnet, daß das Gewichtsverhältnis A1:B1 der Pfropfgrundlagen im Bereich von 95:5 bis 35:65 liegt und der Anteil der Summe A1 und B1 der Pfropfgrundlagen 10 bis 35 Gew.%, bezogen auf die Formmasse aus A, B und C beträgt.

2. Formmasse nach Anspruch 1, deren erstes Pfropfmischpolymerisat A aus einer Pfropfgrundlage A1 mit einem mittleren Teilchendurchmesser (Gewichtsmittel) im Bereich von 60 bis 100 nm erhalten worden ist.

3. Formmasse nach Anspruch 2, deren erstes Pfropfmischpolymerisat A aus 60 bis 70 Gew.% der Pfropfgrundlage A1 und 40 bis 30 Gew.% der Pfropfhülle A2 aus Styrol und einem polaren, copolymerisierbaren, ethylenisch ungesättigten Monomeren besteht.

**4.** Formmasse nach Anspruch 1, deren zweites Pfropfmischpolymerisat B aus einer Pfropfgrundlage B1 mit einem mittleren Teilchendurchmesser (Gewichtsmittel) im Bereich von 250 bis 500 nm erhalten worden ist.

**5.** Formmasse nach Anspruch 4, deren zweites Pfropfmischpolymerisat B aus 60 bis 70 Gew.% der Pfropfgrundlage B1, 10 bis 20 Gew.% Styrol B2 und 20 bis 30 Gew.% der Mischung B3 von Styrol und Acrylnitril besteht.

**6.** Formmasse nach Anspruch 1, enthaltend A und B in einer solchen Menge, daß das Gewichtsverhältnis von A1:B1 95:5 bis 50:50 beträgt.

**7.** Formmasse nach Anspruch 6, enthaltend A, B und C in einer solchen Menge, daß der Anteil von A1 und B1 zusammen 15 bis 30 Gew.%, bezogen auf die Formmasse aus A, B und C, beträgt.

**8.** Formmasse nach Anspruch 1, enthaltend übliche Zusatz- und/oder Hilfsstoffe D in jeweils wirksamer Menge.

**9.** Formmasse nach Anspruch 8, enthaltend als Hilfsstoff D einen Farbstoff oder ein Farbpigment.

**10.** Verwendung der Formmasse nach Anspruch 8 zur Herstellung von Formkörpern oder Formteilen.

**Claims**

**1.** A thermoplastic molding material containing

A: a first graft copolymer A comprising

A1: from 55 to 75 % by weight, preferably from 60 to 70 % by weight, based on A, of an elastomeric, crosslinked acrylate polymer A1 having a mean particle diameter (weight average) of from 50 to 150 nm as the graft base, and

A2: from 45 to 25 % by weight, preferably from 40 to 30 % by weight, based on A, of a graft shell A2 made from a vinyl-aromatic monomer and a polar, copolymerizable, ethylenically unsaturated monomer in a weight ratio of from 80:20 to 65:35,

B: a second, separately prepared graft copolymer B comprising

B1: from 50 to 80 % by weight, preferably from 60 to 70 % by weight, based on B, of an elastomeric, crosslinked acrylate polymer B1 which is different from A1 and has a mean particle diameter (weight average) in the range from 200 to 700 nm as the graft base,

B2: a first graft shell B2 comprising from 5 to 30 % by weight, preferably from 10 to 20 % by weight, based on B, of a vinyl-aromatic monomer and

B3: a second graft shell B3 comprising from 15 to 40 % by weight, preferably from 20 to 30 % by weight, based on B, of a mixture of a vinylaromatic monomer B31 and a polar, copolymerizable, ethylenically unsaturated monomer B32 in a B31:B32 weight ratio of from 90:10 to 60:40, and

C: a hard matrix C comprising one or more copolymers of styrene, α-methylstyrene, acrylonitrile, methyl methacrylate and/or phenylmaleimide,

wherein the A1:B1 weight ratio of the graft bases is in the range from 95:5 to 35:65, and the proportion of A1 plus B1 in the graft bases is from 10 to 35 % by weight, based on the molding material comprising A, B and C.

**2.** A molding material as claimed in claim 1, whose first graft copolymer A has been obtained from a graft base A1 having a mean particle diameter (weight average) in the range from 60 to 100 nm.

**3.** A molding material as claimed in claim 2, whose first graft copolymer A comprises from 60 to 70 % by weight of the graft base A1 and from 40 to 30 % by weight of the graft shell A2 made from styrene and a polar, copolymerizable, ethylenically unsaturated monomer.

**4.** A molding material as claimed in claim 1, whose second graft copolymer B has been obtained from a graft base B1 having a mean particle diameter (weight average) in the range from 250 to 500 nm.

**5.** A molding material as claimed in claim 4, whose second graft copolymer B comprises from 60 to 70 % by weight of the graft base B1, from 10 to 20 % by weight of styrene B2 and from 20 to 30 % by

9

weight of the mixture B3 of styrene and acrylonitrile.

6. A molding material as claimed in claim 1, containing A and B in such an amount that the A1:B1 weight ratio is from 95:5 to 50:50.

7. A molding material as claimed in claim 6, containing A, B and C in such an amount that the proportion of A1 and B1 together is from 15 to 30 % by weight, based on the molding material comprising A, B and C.

8. A molding material as claimed in claim 1, containing conventional additives and/or auxiliaries D, in each case in an effective amount.

9. A molding material as claimed in claim 8, containing, as auxiliary D, a dye or colored pigment.

10. The use of a molding material as claimed in claim 8 for producing moldings.

**Revendications**

1. Masse à mouler thermoplastique, comprenant
   A: un premier copolymère par greffage A, composé de
      A1 : 55 à 75% en poids, de préférence 60 à 70% en poids, par rapport à A, d'un polymère d'esters acryliques élastomère et réticulé A1 avec une granulométrie moyenne (moyenne pondérale) de 50 à 150 nm comme base de greffage, et
      A2 : 45 à 25% en poids, de préférence 40 à 30% en poids, par rapport à A, d'une enveloppe de greffage A2 constituée d'un monomère vinylaromatique et d'un monomère éthyléniquement insaturé, polaire et copolymérisable, dans un rapport massique de 80 : 20 à 65 : 35,
   B : un deuxième copolymère par greffage B préparé séparément, composé de
      B1 : 50 à 80% en poids, de préférence 60 à 70% en poids, par rapport à B, d'un polymère d'esters acryliques élastomère et réticulé B1, différent de A1, avec une granulométrie moyenne (moyenne pondérale) dans le domaine de 200 à 700 nm comme base de greffage.
      B2 : une première enveloppe de greffage B2 constituée de 5 à 30% en poids, de préférence 10 à 20% en poids, par rapport à B, d'un monomère vinylaromatique et
      B3 : une deuxième enveloppe de greffage B3 constituée de 15 à 40% en poids, de préférence 20 à 30% en poids, par rapport à B, d'un mélange d'un monomère vinylaromatique B31 et d'un monomère éthyléniquement insaturé, polaire et copolymérisable B32, dans un rapport massique de B31 par rapport à B32 de 90 : 10 à 60 : 40 et
   C : une matrice rigide C, composée d'un ou de plusieurs copolymères de styrène, d'α-méthylstyrène, d'acrylonitrile, de méthacrylate de méthyle et/ou de phénylmaléinimide,
   caractérisée en ce que le rapport massique A1 : B1 des bases de greffage se situe dans le domaine de 95 : 5 à 35 : 65 et que la fraction de la somme A1 et B1 des bases de greffage se situe entre 10 à 35% en poids, par rapport à la masse à mouler composée de A, B et C.

2. Masse à mouler selon la revendication 1, dont le premier copolymère par greffage A a été obtenu à partir d'une base de greffage A1 avec une granulométrie moyenne (moyenne pondérale) dans le domaine de 60 à 100 nm.

3. Masse à mouler selon la revendication 2, dont le premier copolymère par greffage A est composé de 60 à 70% en poids de la base de greffage A1 et de 40 à 30% en poids de l'enveloppe de greffage A2 constituée de styrène et d'un monomère éthyléniquement insaturé, polaire et copolymérisable.

4. Masse à mouler selon la revendication 1, dont le deuxième copolymère par greffage B a été obtenu à partir d'une base de greffage B1 avec une granulométrie moyenne (moyenne pondérale) dans le domaine de 250 à 500 nm.

5. Masse à mouler selon la revendication 4, dont le deuxième copolymère par greffage B est composé de 60 à 70% en poids de la base de greffage B1, de 10 à 20% en poids de styrène B2 et de 20 à 30% en poids du mélange B3 constitué de styrène et d'acrylonitrile.

6. Masse à mouler selon la revendication 1, comprenant A et B en une quantité telle que le rapport massique de A1 : B1 vaut 95 : 5 à 50 : 50.

7. Masse à mouler selon la revendication 6, comprenant A, B et C en une quantité telle que la fraction de A1 et B1 pris ensemble vaut 15 à 30% en poids par rapport à la masse à mouler composée de A, B et C.

8. Masse à mouler selon la revendication 1, comprenant des additifs et/ou des adjuvants courants D, respectivement en quantité efficace.

9. Masse à mouler selon la revendication 8, comprenant comme adjuvant D un colorant ou un pigment coloré.

10. Utilisation de la masse à mouler selon la revendication 8 pour la préparation d'objets moulés et de pièces moulées.